# DEMANDE DE BREVET EUROPEEN

(11) **EP 2 508 389 A2**
(43) Date de publication de la demande: **10.10.2012**
(21) Numéro de dépôt: 12305407.4
(22) Date de dépôt: 05.04.2012
(51) Int. Cl.: B60L 11/18, B60L 3/04

(54) **Dispositif de transmission d'énergie électrique et procédé de surveillance associé**

(30) Priorité: 07.04.2011 FR 1153010
(71) Demandeur: HAGER ELECTRO S.A.S. (société par Actions Simplifiée), 67210 Obernai (FR)
(72) Inventeur: Kalischek, Nicolas, 67210 Bernardswiller (FR)
(74) Mandataire: Nuss, Laurent

(57) **Abrégé**

La présente invention a pour objet un dispositif de transmission (1) d'énergie électrique à partir d'une installation électrique et vers au moins un consommateur (2), ledit dispositif comprenant un commutateur, dont l'ouverture stoppe ladite transmission d'énergie électrique.

Ce dispositif est caractérisé en ce qu'il comprend, en outre un moyen de mesure de la tension transmise, notamment apte à mesurer la tension en continu lors de la transmission (1), et un moyen de commande apte à commander l'ouverture du commutateur, dès lors qu'une baisse de tension est détectée pour la tension transmise.

L'invention a aussi pour objet un procédé de surveillance d'un tel dispositif, et présentant une étape de mesure de la tension ainsi qu'une étape de commande de l'ouverture du commutateur, dès lors qu'une baisse de tension est détectée.

Application notamment à la fourniture sécurisée d'énergie électrique à des batteries électriques motrices d'un véhicule automobile, à partir d'une installation électrique domestique.

## Description

La présente invention relève du domaine des appareils de transmission d'électricité, circulant dans une installation électrique, à au moins un consommateur. Ce dernier peut être, par exemple, un poste à souder électrique ou un chargeur de batterie motrice de véhicule automobile, éventuellement combiné en parallèle à une lampe électrique ou tout autre consommateur électrique, l'énergie électrique transmise étant extraite d'une installation électrique domestique. La présente invention a plus particulièrement pour objet un dispositif de transmission particulier ainsi qu'un procédé de surveillance d'un tel dispositif.

A titre d'exemple, dans le domaine domestique, il est particulièrement intéressant d'envisager la recharge de batterie motrice de véhicule automobile, c'est-à-dire de batterie électrique utilisée pour créer le mouvement du véhicule automobile, à partir de l'installation électrique domestique, c'est-à-dire d'une installation électrique d'une habitation ou d'un immeuble. Il suffirait ainsi pour un conducteur de laisser son véhicule se recharger à domicile, par exemple toute la nuit, en le branchant sur un socle électrique de son installation, du type prise murale. Il se pose néanmoins de graves problèmes de sécurité. En effet, une installation domestique a une capacité limitée pour la fourniture sécurisée d'énergie électrique, notamment compte tenu des équipements matériels utilisés, comme les fils, les connecteurs, ou les socles, qui peuvent être dégradés par échauffement suite au passage d'une trop grande quantité d'énergie, et éventuellement mener au déclenchement d'un incendie.

Dans le cas d'un consommateur tel qu'un chargeur de batterie motrice de véhicule automobile, le temps mis pour la recharge est d'autant plus court que l'ampérage de l'électricité qui lui est transmise est élevé. Une électricité d'ampérage élevé, même s'il ne dépasse pas l'ampérage maximal que l'installation peut délivrer, peut néanmoins se révéler dangereuse pour l'installation domestique, notamment lorsque, comme pour une recharge de batterie motrice de véhicule, l'électricité est transmise pendant un temps très long, pouvant être supérieur à 10 heures. La dégradation peut ainsi avoir lieu à cause de la quantité d'énergie électrique véhiculée et non seulement à cause de l'ampérage. Il est donc important d'éviter la dégradation par échauffement de tout composant électrique dans lequel circule l'électricité transmise, et le risque d'incendie qui en découle. Le sectionneur principal de l'installation, ou encore les disjoncteurs de ligne, ne peuvent pas assurer la surveillance nécessaire, compte tenu du montage très en amont, de la complexité de l'installation électrique qu'ils alimentent et à laquelle le consommateur est branché, mais aussi car ils surveillent généralement des caractéristiques instantanées de l'électricité, telles que la tension, l'ampérage, un courant de fuite, ou autre. Il est donc nécessaire d'avoir recours à des dispositifs de transmission sécurisée d'électricité apte à prendre en compte la quantité d'énergie véhiculée dans le temps sur le circuit sollicité.

Dans le domaine des dispositifs de transmission surveillée d'énergie électrique, on connaît de WO 2010/049 775 un dispositif de transmission d'énergie électrique sous forme d'un flexible de connexion destiné à être branché entre un socle électrique et un véhicule électrique. Il comporte un commutateur, dont l'ouverture stoppe la transmission de l'énergie électrique dès lors qu'est détectée une température trop élevée ou la présence d'un courant de fuite.

WO 02/063 648 divulgue un dispositif de transmission d'énergie électrique sous la forme d'un socle de connexion, du type prise murale, sensible à la présence d'une fiche, à la présence d'une charge électrique en aval, au courant envoyé, et à la température. Le socle est muni d'un commutateur, qui s'ouvre et stoppe la transmission d'énergie électrique dès lors qu'un de ces paramètres n'est pas dans un état prédéfini.

WO 00/51 207 divulgue un dispositif de transmission sous la forme d'une prise électrique gigogne, pouvant être branchée dans un socle classique d'une installation domestique, et portant lui-même plusieurs socles pour accueillir d'autres appareils électriques. Il est éventuellement équipé d'un commutateur, ou coupe circuit, capable de stopper la transmission d'énergie électrique dès la détection d'un courant de fuite ou d'une surcharge de courant.

L'inconvénient de ces types de dispositif de transmission, et, plus particulièrement, des conditions dans lesquelles la transmission d'énergie électrique est stoppée, est que la sécurité des appareils utilisés dans la transmission n'est pas garantie, notamment face au risque d'échauffement progressif, dû à la quantité d'énergie fournie dans le temps, indépendamment de l'ampérage. Un composant peut, par exemple, fondre, à cause de l'importance de la quantité d'énergie progressivement transmise, sans que cela soit détecté. La température du socle peut être acceptable, alors qu'un connecteur ou conducteur amont commence à fondre, par exemple.

Le problème essentiel que se propose de résoudre l'invention est donc celui de la sécurité de la fourniture d'énergie électrique à au moins un consommateur nécessitant une quantité d'énergie proche des capacités maximales de l'installation à partir de laquelle l'électricité est transmise, c'est-à-dire une quantité d'énergie proche de celle que l'installation électrique peut transmettre sans danger de façon sensiblement ininterrompue, et ce pour les composants intervenants dans ladite fourniture. L'invention vise notamment à éviter que la quantité d'énergie électrique fournie ne dégrade l'un quelconque des composants électriques.

La présente invention a pour but de résoudre ce problème en proposant un dispositif de transmission stoppant cette dernière dès lors que ledit dispositif estime qu'un des composants électrique se dégrade. A cet effet, l'invention a pour objet un dispositif de transmission d'énergie électrique d'une installation électrique vers au moins un consommateur, transmettant préférentiellement toute l'électricité nécessaire audit au moins un consommateur, ledit dispositif comprenant un commutateur dont l'ouverture stoppe ladite transmission d'énergie électrique. Ce dispositif est **caractérisé en ce qu'**il comprend, en outre :
- un moyen de mesure de la tension transmise, notamment apte à mesurer la tension transmise en continu lors de la transmission, et
- un moyen de commande, apte à commander l'ouverture du commutateur, dès lors qu'une baisse de tension est détectée pour la tension transmise.

L'invention a aussi pour objet un procédé de surveillance d'un tel dispositif de transmission d'énergie. Ce procédé est **caractérisé en ce qu'**il comprend les étapes consistant à :
- mesurer la tension transmise, notamment mesurer la tension transmise en continu lors de la transmission, et
- commander l'ouverture du commutateur, dès lors qu'une baisse de tension est détectée pour la tension transmise.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- la figure 1 est une vue schématique d'une installation électrique à laquelle est branchée un dispositif de transmission ;
- la figure 2 schématise les composants minimums d'un dispositif de transmission selon l'invention, et
- la figure 3 est une vue schématique d'un procédé selon l'invention.

L'invention a donc pour objet un dispositif de transmission 1 d'énergie électrique d'une installation électrique vers au moins un consommateur 2, transmettant préférentiellement toute l'électricité nécessaire audit au moins un consommateur 2, ledit dispositif comprenant un commutateur 3 dont l'ouverture stoppe ladite transmission d'énergie électrique. Le commutateur 3 peut être un relais piloté, un transistor, un contact mobile, un actionneur électromagnétique à bobine, ou autres. Le moyen de commande 5 est adapté au commutateur 3 et peut être électronique, magnétique, mécanique, ou autre.

Dans les exemples illustrés, il s'agit d'un dispositif de transmission 1 d'énergie électrique destiné à transmettre une électricité domestique, c'est-à-dire à partir d'une installation électrique domestique, tel qu'une installation électrique d'une maison d'habitation ou d'un immeuble. L'électricité qui y circule peut aller jusqu'à environ 16, voire 32 Ampères et 230 Volts, en France par exemple. Le dispositif de transmission 1 est donc préférentiellement utilisé pour fournir une électricité avec un ordre de grandeur de tension destinée à de la puissance, et non une électricité destinée à représenter un simple signal sur un réseau d'information ou de communication, utilisant des électricités très faibles.

Le dispositif de transmission 1 peut apporter de l'électricité à un seul consommateur 2, notamment un consommateur 2 nécessitant, en termes d'ampérage, une électricité proche, voire supérieure, de celle pouvant circuler sans danger dans l'installation électrique à partir de laquelle l'électricité est transmise. Le au moins un consommateur 2 peut être relié mécaniquement et/ou électriquement au dispositif de transmission 1 uniquement de façon intermittente, comme par un branchement et/ou la fermeture d'un circuit électrique. Il est en de même pour le dispositif de transmission 1 par rapport à l'installation électrique : préférentiellement, il peut en être temporairement déconnecté électriquement et/ou mécaniquement. Le dispositif de transmission 1 peut donc transmettre de l'électricité de façon discontinue, à l'inverse d'un disjoncteur principal, par exemple, puisque, dans le cas d'une recharge de batterie électrique motrice pour véhicule automobile, la transmission ne peut bien évidemment avoir lieu que lorsque le véhicule est effectivement branché.

Concernant le au moins un consommateur 2, il peut s'agir, par exemple, d'un seul consommateur 2 nécessitant une grande partie de l'ampérage maximal pouvant circuler sans danger dans l'installation électrique : par exemple, un consommateur 2 nécessitant un ampérage de 15 à 20 Ampères alors que l'installation domestique ne peut délivrer au maximum que 16 Ampères. Ce consommateur 2 unique peut consister, par exemple, en un poste à souder électrique ou en un chargeur de batteries motrices de véhicule automobile. Préférentiellement, l'essentiel de l'électricité utilisée par le consommateur 2, notamment l'intégralité de l'électricité, transite par le dispositif de transmission 1.

Le dispositif de transmission 1 peut aussi apporter de l'électricité à plusieurs consommateurs 2, tels que différents appareils branchés en aval du dispositif de transmission 1. A titre d'exemple, le dispositif de transmission 1 peut alimenter un chargeur de batteries motrices automobiles, ainsi que la batterie de démarrage et/ou une lumière du type veilleuse. Il peut aussi s'agir d'appareils électroménagers connectés en série après le dispositif de transmission 1. Cette pluralité de consommateurs 2 est alors alimentée en électricité essentiellement grâce au dispositif de transmission 1.

Une partie de l'électricité qui circule dans l'installation domestique en est donc extraite et transmise à au moins un consommateur 2 branché au dispositif de transmission 1.

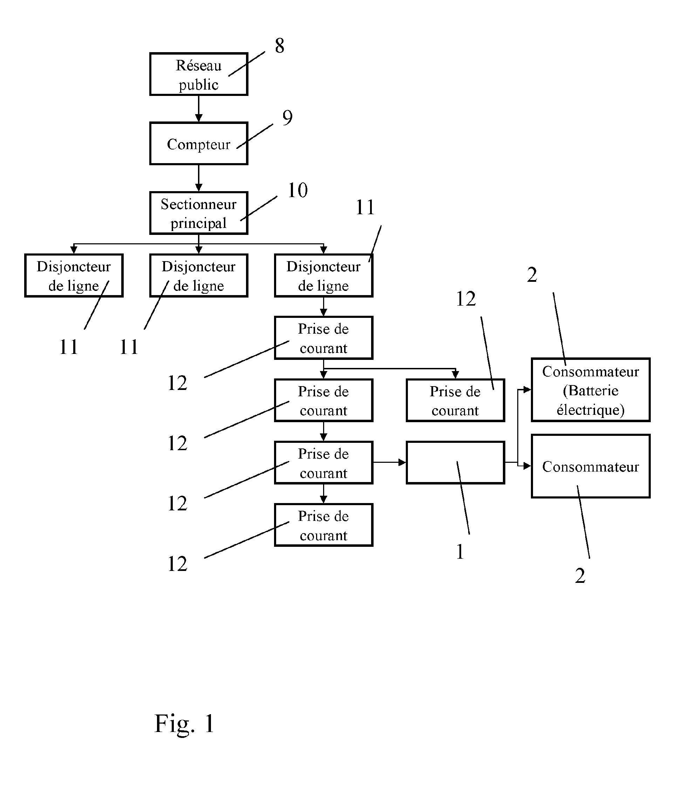

La figure 1 montre une mise en place possible du dispositif de transmission 1 avec une installation électrique domestique classique. Cette dernière comprend, par exemple, un compteur 9 électrique pour toute l'installation, ce compteur étant relié au réseau électrique public 8 et alimentant un sectionneur principal 10. Le sectionneur principal 10 alimente un ensemble de disjoncteurs de ligne 11, chacun d'eux assurant une protection d'un ensemble de composants électriques 12 qui y sont branchés en aval. Un composant électrique 12 est, normalement, un socle mural du type prise de courant. Certains composants électrique 12 peuvent être branchés en parallèle l'un à l'autre. Dans la mise en place illustrée dans la figure 1, le dispositif de transmission 1 est branché sur un socle, type prise murale, de l'installation électrique, et alimente deux consommateurs 2 parallèles. La branche de l'installation électrique à laquelle appartient la prise électrique formant le composant électrique 12 où est connecté le dispositif de transmission 1 peut donc avoir des composants électriques placés en amont ou aval de ladite prise.

Dans les réalisations décrites ci-dessous, le dispositif de transmission 1 transmet de l'électricité à partir d'une installation domestique et vers un seul consommateur 2, à savoir un véhicule muni d'au moins une batterie électrique motrice, c'est-à-dire une batterie fournissant l'énergie pour le mouvement du véhicule. Une telle transmission d'énergie électrique à un chargeur de batteries motrices de véhicule automobile électrique ou hybride est en partie conditionnée par des normes qui définissent notamment une phase d'identification de la batterie électrique ou des batteries électriques, cette phase ayant lieu au début de la transmission. Les différences phases de la transmission d'énergie électrique, en termes de caractéristiques de l'électricité transmise, sont généralement pilotées par le chargeur embarqué sur le véhicule. On considère ici que la transmission d'énergie électrique a lieu dès lors que de l'électricité circule de l'installation électrique vers le au moins un consommateur 2, même si cette électricité ne représente qu'une puissance limitée et sert, par exemple, uniquement à identifier le type de consommateur 2.

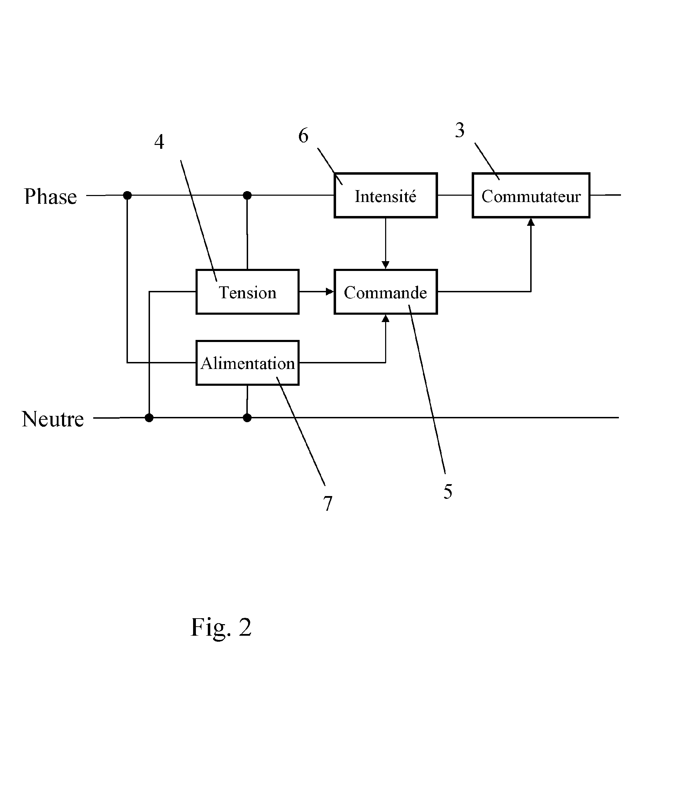

Selon l'invention, comme l'illustre la figure 2, le dispositif de transmission 1 comprend, en outre :
- un moyen de mesure de la tension 4 transmise, notamment apte à mesurer la tension transmise 101 en continu lors de la transmission, et
- un moyen de commande 5, apte à commander l'ouverture 102 du commutateur 3, dès lors qu'une baisse de tension est détectée pour la tension transmise, cette commande pouvant être électronique, mécanique, magnétique, ou autre. Il est ainsi possible de stopper la transmission d'énergie électrique dès qu'une baisse de tension est détectée pour l'électricité transmise, cette baisse de tension étant assimilée au début de la dégradation d'un des composants de la ligne d'alimentation électrique du consommateur 2, notamment en amont du dispositif de transmission 1 et en aval du compteur 9 électrique commun à l'installation. La baisse de la tension de l'électricité transmise représente donc la situation critique à partir de laquelle il est estimé que l'installation électrique peut être en danger, quelque part entre le compteur électrique de toute l'installation, et le dispositif de transmission 1, voire le au moins un consommateur 2 lui-même, et donc que la quantité d'énergie électrique qui a été fournie depuis le début de la transmission risque d'avoir dégradé un composant, compte tenu de la chaleur dégagée. La baisse de tension peut aussi être due à un mauvais montage d'un composant de l'installation électrique participant à fournir de l'électricité au dispositif de transmission 1.

Cette caractéristique évite la dégradation thermique d'un composant participant à alimenter électriquement le dispositif de transmission 1, cette dégradation étant due à la circulation d'une trop grande quantité d'énergie. La quantité d'énergie limite peut être atteinte avec une électricité d'un ampérage élevé par rapport aux capacités de l'installation, comme un ampérage de 12 Ampères pour une installation capable d'en fournir 16. La quantité d'énergie limite peut aussi être atteinte avec une électricité d'un ampérage beaucoup plus faible et pouvant circuler sans danger dans l'installation pendant une période de temps limitée. En effet, une électricité d'un ampérage faible, par exemple 3 ou 7 Ampères, circulant pendant un temps très long, peut mener à la quantité d'énergie à partir de laquelle un composant de l'installation peut se dégrader. Il s'agit donc d'éviter un risque de dégradation dû à l'énergie qui est fournie au dispositif de transmission 1, et non dû directement à l'ampérage de l'électricité qui circule.

La figure 2 montre des composants d'un mode de réalisation particulier d'un dispositif de transmission 1 selon l'invention. Il consiste en un dispositif de transmission 1 monophasé, comprenant, sur la phase, un commutateur 3 ainsi qu'un moyen de mesure de l'ampérage 6. Ici, le moyen de commande 5 fait partie d'une unité comprenant un microprocesseur, auquel sont envoyées, d'une part, l'ampérage mesuré par le moyen de mesure de l'ampérage 6 et la tension relevée par le moyen de mesure de la tension 4 transmise, et, d'autre part, l'électricité nécessaire à son propre fonctionnement, au travers d'une alimentation électrique 7, préférentiellement connectée directement entre la phase et le neutre.

Le réseau électrique public 8, qui alimente l'installation en électricité, peut subir des variations de tension, classiquement dues à la connexion ou déconnexion d'un appareil électrique consommant une très grande quantité d'électricité. Une variation de ce type est souvent brutale, mais la tension est généralement rétablie rapidement, par exemple au bout de 2 minutes en France. Une baisse de tension provoquée par la dégradation d'un composant à cause de la quantité d'énergie qui a été fournie prend généralement la forme d'une baisse beaucoup moins rapide mais relativement continue, et peut s'étendre sur plusieurs minutes, ou des dizaines de minutes. Il n'est souvent pas nécessaire de donner l'ordre d'ouvrir le commutateur 3 pour une variation due au réseau électrique public 8.

La baisse de tension peut être détectée grâce à la variation décroissante de la tension dans le temps, pendant un temps minimum. Alternativement, le dispositif de transmission 1 comprend, en outre, une mémoire, apte à mémoriser une tension de référence, le moyen de commande 5 étant apte à commander l'ouverture 102 du commutateur 3 dès lors qu'une baisse de tension par rapport à cette tension de référence est détectée pour la tension transmise. La baisse de tension peut être une baisse d'au moins environ 5% de la tension de référence, éventuellement détectée pendant une durée d'au moins 2 minutes environ. La prise en compte du temps permet, le cas échéant, d'éviter que des variations de tension au niveau du réseau public d'alimentation de l'installation ne soient détectées comme un danger pour l'installation. La baisse de tension est donc préférentiellement détectée par comparaison entre la valeur transmise et une valeur de référence. Si une baisse de tension est observée, le commutateur 3 s'ouvre et la transmission d'électricité cesse, mettant un terme au danger auquel la ligne électrique est exposée, au niveau d'un des composants entre l'alimentation centrale de toute l'installation électrique domestique, c'est-à-dire le compteur 9 électrique, et le dispositif de transmission 1.

Selon une caractéristique supplémentaire possible permettant d'éviter une mauvaise évaluation de l'apparition d'un risque électrique, notamment par la comparaison avec une tension de référence non représentative d'une transmission sans risque, le dispositif de transmission 1 comprend un moyen d'étalonnage apte à définir la tension de référence 104, notamment lors de la transmission d'énergie électrique. La tension de référence utilisée doit en effet être adaptée aux caractéristiques de l'installation électrique et des autres appareils qu'elle alimente, puisque la tension disponible pour le consommateur 2 peut, notamment compte tenu des autres appareils allumés, n'être qu'une portion de la tension normalement délivrée par l'installation domestique. L'installation peut, par exemple, compte tenu des autres appareils qu'elle alimente ou compte tenu d'autres phénomènes au niveau du réseau électrique public 8 alimentant l'installation, ne délivrer, au début de la transmission ou tout au long de celle-ci, qu'une tension de 210 Volts, pour une installation électrique domestique qui fonctionne normalement avec 230 Volts.

Dans ce cas, si la tension de référence est définie de façon non modifiable comme valant ces 230 Volts classiques d'une installation électrique domestique, une baisse de tension pourra être détectée dès le branchement alors qu'il n'existe encore aucun risque. De la même manière, si la tension de référence est définie de façon non modifiable comme valant 210 Volts, l'ouverture du commutateur 3 n'aura pas lieu pour une baisse de tension de 230 à 210 Volts alors qu'une telle baisse représente une dégradation matérielle. La tension de référence doit donc avantageusement être définie lors de chaque transmission, pour tenir compte de la tension que l'installation électrique peut fournir sans risque de fusion d'un des composants intervenants dans l'alimentation du consommateur 2 en électricité. Il est en effet possible que les conditions de transmission d'électricité soient différentes à chaque transmission, voire évoluent au cours de la transmission, ce qui peut donc perturber l'identification d'une situation dangereuse.

La tension de référence peut, par exemple, être définie avant la transmission d'énergie, en fonction de la tension détectée comme disponible compte tenu des autres appareils électriques branchés à l'installation. Préférentiellement, la tension de référence est définie lors de la transmission, qui, dans le cas de la recharge de batteries motrice, comprend des phases adéquates, comme décrit ci-dessous.

Ainsi, selon une autre caractéristique additionnelle possible, permettant de détecter une situation de transmission d'énergie électrique dont la tension peut de façon pertinente être utilisée comme tension de référence, le dispositif de transmission 1 comprend un moyen de mesure de l'ampérage 6, apte à mesurer l'ampérage 105 de l'électricité transmise, notamment le mesurer en continu ou au début de la transmission d'énergie électrique. Il est ainsi possible d'utiliser le dispositif de transmission 1, lorsque celui-ci est déplaçable, comme dans certains modes de réalisation décrits plus loin, avec des installations électriques inconnues, puisque le dispositif de transmission 1 détecte lui-même la tension de référence, représentative d'une transmission sans risque.

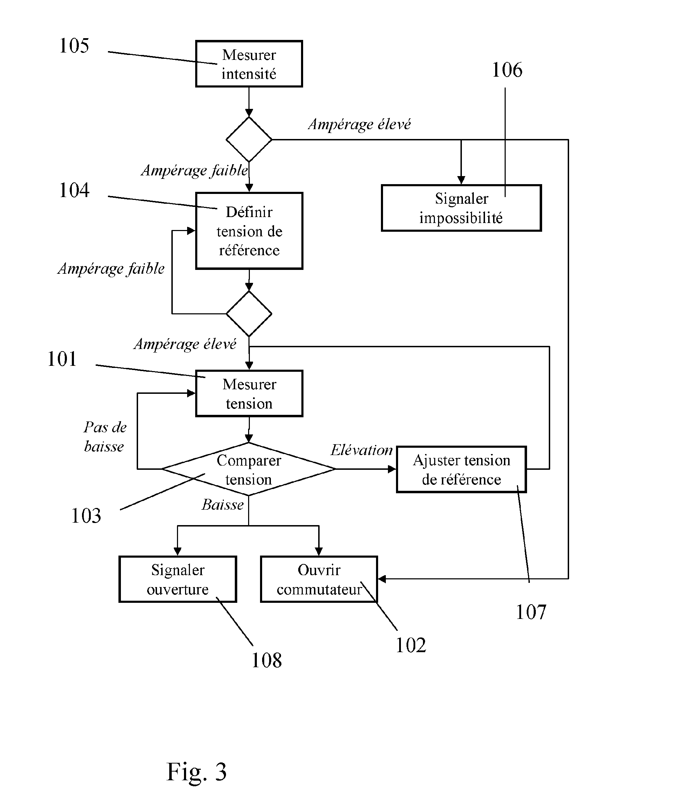

Une transmission d'énergie électrique où l'ampérage est très faible, notamment inférieur à 1 Ampère, est sans danger pour les composants de l'installation. Ainsi, dès que le dispositif de transmission 1 détecte que l'électricité transmise a un ampérage très faible, la tension mesurée est utilisée comme tension de référence, comme le montre la figure 3.

Dans le cas d'une recharge de batterie motrice de véhicule automobile, les premières phases de la transmission se font avec un ampérage très faible, notamment afin d'identifier le type de batterie à charger, et c'est donc préférentiellement lors de ces phases initiales que la définition de la tension de référence peut se faire. La tension détectée pendant ces phases représente de façon pertinente la tension à partir de laquelle une baisse représente un danger pour les composants électriques, voire un début de dégradation par haute température et risque d'incendie.

Alternativement, lorsque l'ampérage circulant dans le dispositif de transmission 1 est élevé dès le début de la transmission, ce qui peut être le cas si le dispositif de transmission 1 alimente un consommateur 2 électrique du type radiateur électrique ou sèche serviette, le dispositif de transmission 1 peut commander l'ouverture 102 du commutateur 3 et signaler l'impossibilité de définir la tension de référence 106. L'utilisateur peut alors être tenu de spécifier lui-même la tension de référence, grâce à un autre appareil de mesure, par exemple. L'utilisateur peut aussi alors être tenu de débrancher le au moins consommateur 2 du dispositif de transmission 1, tout en laissant ce dernier alimenté, notamment en maintenant la prise gigogne que forme le dispositif de transmission 1 branchée dans un socle électrique de l'installation. Le dispositif de transmission 1 peut alors définir la tension de référence 106, puisqu'aucune intensité ne circule vers le au moins un consommateur 2.

Le dispositif de transmission 1 peut aussi être apte à transmettre de l'information à partir du au moins consommateur 2, et peut donc, à ce titre, par exemple, présenter des connecteurs du type RJ45 ou autres.

Pour certains modes de réalisation, au moins l'un quelconque, et préférentiellement tous, parmi le moyen de mesure de la tension 4 transmise, le moyen de commande 5, la ou une mémoire apte à mémoriser une tension de référence, le ou un moyen d'étalonnage apte à définir la tension de référence 104, et le ou un moyen de mesure de l'ampérage 6, est intégré, ou sont intégrés, dans un bloc autonome intermédiaire, pouvant être monté, directement ou non, entre un socle électrique de connexion, du type prise murale, et le au moins un consommateur 2. Un tel bloc peut prendre la forme d'une prise gigogne, à laquelle peuvent être directement connectés, d'une part, un flexible normalement destiné à la connexion de l'unique consommateur 2, du type chargeur de batteries électriques, à un tel socle, et, d'autre part, soit le consommateur 2 lui-même, soit un tel socle. La prise gigogne peut donc être soit compatible avec le socle au niveau du consommateur 2, soit avec le socle au niveau de l'installation. Dans les deux cas, elle peut aisément être transportée avec le flexible, si le consommateur 2 est un chargeur de véhicule électrique qui transporte généralement le flexible.

Une telle construction sous forme de bloc autonome intermédiaire, surtout si tous les éléments sont intégrés dans un seul et même bloc du type prise gigogne pouvant accueillir un flexible et branchée sur un socle, tel qu'une prise murale, présente l'avantage d'être simple à utiliser, à installer, et à déplacer pour, par exemple, envisager en toute sécurité une charge des batteries électriques motrices d'un véhicule automobile à partir d'une installation électrique inconnue.

Une telle prise gigogne consiste donc préférentiellement en un bloc qui, d'une part, peut être enfiché dans un socle domestique, du type prise électrique murale, et présente donc, à cet effet, des éléments de connexion mâles, et, d'autre part, présente des éléments de connexion femelles, au même titre que le socle dans lequel il se branche. Une telle prise gigogne peut donc à la fois se brancher directement sur le socle domestique, et accueillir directement le flexible, du type rallonge électrique, intelligente ou non, destiné normalement à relier ce socle électrique et le véhicule, cette prise gigogne formant ainsi une pièce intermédiaire entre l'installation électrique et le consommateur 2, sous forme de batterie électrique motrice de véhicule automobile. Bien entendu, une telle prise gigogne peut aussi être de conception adaptée pour s'enficher sur le socle présent sur le véhicule, ce qui le rend toutefois vraisemblablement moins versatile mais dédié au véhicule.

Pour d'autres modes de réalisation, au moins l'un quelconque, et préférentiellement tous, parmi le moyen de mesure de la tension 4 transmise, le moyen de commande 5, la ou une mémoire apte à mémoriser une tension de référence, le ou un moyen d'étalonnage apte à définir la tension de référence 104, et le ou un moyen de mesure de l'ampérage 6, est embarqué, ou sont embarqués, au niveau du au moins un consommateur 2 auquel l'énergie est fournie, préférentiellement au consommateur 2 nécessitant le plus d'électricité ou l'unique consommateur 2. Dans le cas de la recharge de batterie motrice de véhicule, il est donc envisagé que le dispositif de transmission 1 soit entièrement embarqué sur ledit véhicule, par exemple au niveau du socle dans lequel un flexible conducteur doit se brancher, ou au niveau du chargeur.

Pour encore d'autres modes de réalisation, au moins l'un quelconque, et préférentiellement tous, parmi le moyen de mesure de la tension 4 transmise, le moyen de commande 5, la ou une mémoire apte à mémoriser une tension de référence, le ou un moyen d'étalonnage apte à définir la tension de référence 104, et le ou un moyen de mesure de l'ampérage 6, est intégré, ou sont intégrés, à un flexible destiné à être directement relié, d'une part, à un socle de connexion électrique, du type prise murale, et, d'autre part, à un consommateur 2 unique auquel l'électricité est transmise. Le flexible devient donc un flexible intelligent, et forme une rallonge électrique, destinée à être utilisée entre le socle mural et un véhicule électrique, assurant notamment la protection de l'installation électrique domestique.

Dans d'autres modes de réalisation, au moins l'un quelconque, et préférentiellement tous, parmi le moyen de mesure de la tension 4 transmise, le moyen de commande 5, la ou une mémoire apte à mémoriser une tension de référence, le ou un moyen d'étalonnage apte à définir la tension de référence 104, et le ou un moyen de mesure de l'ampérage 6, est intégré ou sont intégrés à un socle de connexion électrique domestique, du type prise murale. Un tel socle électrique domestique peut avoir, pour l'enfichage, la même configuration géométrique qu'un socle électrique classique, type prise murale, et avoir donc le même aspect que les autres socles de l'installation. Préférentiellement, il s'agit d'un socle situé à proximité de l'endroit où le véhicule rechargé est garé, par exemple dans le garage.

Dans d'autres modes de réalisation, le dispositif de transmission 1 peut être un module intégré dans un coffret de distribution électrique.

Selon une caractéristique supplémentaire possible, le dispositif de transmission 1 comporte, en outre, un moyen de réglage de sensibilité, permettant de régler la valeur de la baisse de tension à partir de laquelle la commande de l'ouverture 102 du commutateur 3 est effectuée, et régler éventuellement aussi la valeur de la durée de la baisse de tension à partir de laquelle ladite ouverture est commandée. Il peut permettre un réglage en usine, ou ultérieur par l'utilisateur en fonction du consommateur 2 qu'il souhaite utiliser, ou du véhicule qu'il veut recharger, par exemple.

Selon une caractéristique supplémentaire possible, permettant de communiquer avec l'utilisateur, le dispositif de transmission 1 comporte, en outre, un moyen de signalisation d'état, permettant au moins de signaler l'ouverture 108 du commutateur 3. Il peut s'agir d'une diode lumineuse, d'un émetteur de signal vers un afficheur domotique, préférentiellement sans fil ou fonctionnant sur un principe de bus, ou encore, comme pour certains disjoncteurs, d'une pièce bicolore déplacée devant une fenêtre de visualisation.

Enfin, selon encore une caractéristique supplémentaire possible, le dispositif de transmission 1 comporte, en outre, un moyen de connexion à un réseau de communication tel qu'un réseau domotique, du type bus EIB ou LAN - Local Area Network, permettant au dispositif de transmission 1 d'échanger des informations sur ledit réseau de communication, notamment recevoir et/ou envoyer des consignes. Il est ainsi possible, par exemple, de paramétrer le dispositif de transmission 1 depuis une centrale domotique, en réglant notamment la tension de référence, le seuil de baisse de tension, une durée de baisse de tension, ou autre, ou encore de piloter son fonctionnement depuis cette centrale domotique, en réglant notamment le début de la transmission d'énergie, sa durée, le comportement en cas d'ouverture du commutateur 3, etc.

Dans des modes de réalisation particuliers, l'invention est mise en oeuvre sous la forme d'un socle mural pour le branchement de fiche ou prise électrique. Un tel socle peut être destiné à un montage encastré ou saillie et présente habituellement aussi une plaque de montage, pour sa fixation à un élément de montage tel qu'une boîte encastrée, ainsi qu'un enjoliveur comprenant un puits pour l'accueil de la fiche, voire aussi un couvercle et un élément intermédiaire de protection enfant. Le dispositif de transmission 1 peut donc prendre la forme d'un socle électrique comprenant au moins un commutateur 3, au moins un moyen de mesure de la tension 4 et au moins un moyen de commande 5 tels que décrits ci-dessus, sous la forme d'un module dédié, ou formant un seul élément avec l'appareillage électrique de transmission et de connexion de fiches. Le dispositif de transmission 1 forme donc un socle électrique fonctionnellement enrichi puisqu'il permet, outre la transmission du courant, la surveillance de certaines caractéristiques de la circulation du courant et l'éventuelle ouverture de la transmission électrique dès lors qu'un défaut est détecté, ce défaut prenant la forme d'une baisse régulière de la tension.

Les composants du dispositif de transmission 1 décrits ci-dessus peuvent aussi être répartis dans plusieurs composants différents, par exemple : un socle de connexion, pour la connexion électrique d'une fiche, comprenant un moyen de mesure de la tension 4 tel que décrit ci-dessus, les résultats de mesure étant ensuite communiqués à un autre composant, par exemple une centrale domotique ou une unité de contrôle, qui pourra ensuite envoyer un ordre d'ouverture à un moyen de commande 5 tel que décrit ci-dessus et que comprend ledit socle ou que comprend un autre équipement comme un disjoncteur ou autre sectionneur.

Ainsi, préférentiellement, le socle électrique comprend au moins un moyen de mesure de la tension 4 tel que décrit ci-dessus, les autres composants du dispositif de transmission 1, une unité de traitement, un moyen de commande 5, des contacts électriques commutables pouvant être placés aussi dans ce socle ou dans un autre composant de l'installation électrique.

L'invention a aussi pour objet un procédé de surveillance d'un dispositif d'énergie électrique 1 d'une installation électrique vers au moins un consommateur 2, transmettant préférentiellement toute l'électricité nécessaire audit au moins un consommateur 2, ledit dispositif comprenant un commutateur 3 dont l'ouverture stoppe ladite transmission d'énergie électrique. Selon l'invention, ce procédé comprend les étapes consistant à :
- mesurer la tension transmise 101, notamment mesurer la tension transmise en continu lors de la transmission, et
- commander l'ouverture 102 du commutateur 3, dès lors qu'une baisse de tension est détectée pour la tension transmise.

La figure 3 donne une vue schématique d'un procédé selon l'invention, une fois le dispositif de transmission 1 connecté électriquement à l'installation électrique et à l'au moins un consommateur 2. Cette connexion électrique préliminaire nécessite donc, par exemple, le branchement mécanique et/ou la fermeture électrique d'un circuit, voir la fermeture du commutateur 3.

La mesure de tension transmise 101 est préférentiellement réalisée en continu, pendant toute la transmission d'électricité à l'au moins un consommateur 2. Alternativement, elle peut se faire à intervalles temporels définis. Comme déjà exposé plus haut, la détection d'une situation dangereuse, pour le dispositif de transmission 1, pour l'installation électrique amont, voire pour un composant aval audit dispositif, peut consister à évaluer la variation dans le temps de la tension, et à commander l'ouverture 102 du commutateur 3 dès lors qu'une décroissance est observée pendant une certaine durée. Le raisonnement repose donc ici en quelque sorte sur la dérivée de la tension dans le temps. L'avantage est, entre autres, de pouvoir vérifier plus facilement s'il s'agit d'une discontinuité due au réseau public alimentant l'installation ou une dégradation à cause de la quantité d'énergie qui a été transmise. Comme le montre la figure 3, la commande de l'ouverture 102 du commutateur 3 a lieu si une baisse significative de la tension est observée, c'est-à-dire une baisse d'au moins une certaine valeur, et préférentiellement pendant un certain temps.

Alternativement, et préférentiellement, la détection du danger consiste à détecter une baisse de la tension par rapport à une tension de référence. Ainsi, préférentiellement, le procédé comprend aussi une étape consistant à comparer la tension mesurée avec une tension de référence 103, l'étape de commande de l'ouverture 102 du commutateur 3 étant réalisée dès lors qu'une baisse de tension par rapport à cette tension de référence est détectée pour la tension transmise, notamment une baisse de tension ayant lieu pendant un temps minimum paramétré.

Selon une caractéristique additionnelle envisageable, le procédé comprend une étape consistant à définir la tension de référence 104, notamment lors de la transmission d'énergie électrique. Dans le cas de la transmission à des batteries électriques motrices de véhicule automobile, cette étape est préférentiellement réalisée lors du début de la transmission, au cours des phases pendant lesquelles l'ampérage de l'électricité transmise par le dispositif de transmission 1 est relativement faible, garantissant une tension représentative d'une situation non dangereuse.

Ainsi, afin de définir une tension de référence qui correspond effectivement à une situation non dangereuse, et selon une autre caractéristique additionnelle envisageable, le procédé comprend une étape consistant à mesurer l'ampérage 105 de l'électricité transmise, notamment le mesurer en continu ou au début de la transmission d'énergie électrique, l'éventuelle étape de définition de la tension de référence 104 étant réalisée au début de la transmission d'énergie électrique et consistant à définir, comme tension de référence, la tension relevée alors que l'ampérage de l'électricité transmise est faible, notamment inférieure à 1 Ampère.

Après la définition de la tension de référence 104, l'ampérage de l'électricité transmise est préférentiellement encore vérifié, et le contrôle de la tension, comprenant tant la mesure de la tension 101 que la commande de l'ouverture 102 du commutateur 3, ne se fait que si l'ampérage présente une valeur suffisante pour représenter la circulation d'une électricité de puissance pour le au moins un consommateur 2 aval, c'est-à-dire, par exemple, si un ampérage supérieur à 3 Ampères, préférentiellement supérieur à 5 Ampères, est détecté.

Selon une caractéristique additionnelle possible, le procédé comprend, en outre, une étape consistant à signaler l'impossibilité de définir la tension de référence 106, notamment lorsque l'ampérage de l'électricité qui circule est trop élevé dès le début de la transmission. Cela permet de laisser l'utilisateur spécifier la tension de référence, lorsque le au moins consommateur 2, auquel le dispositif de transmission 1 fournit l'énergie électrique, nécessite, dès le début de la transmission, une électricité d'un ampérage élevé. Comme le montre la figure 3, cette étape est réalisée si l'ampérage mesuré est trop élevé pour représenter une transmission sans danger pour l'installation, par exemple si l'ampérage est supérieur à 3 Ampères, et préférentiellement si l'ampérage est supérieur à 5 Ampères.

Avantageusement, selon une caractéristique possible, le procédé comprend, en outre, une étape consistant à ajuster la tension de référence 107, revenant à modifier la tension de référence, réalisée au cours de la transmission d'énergie électrique, préférentiellement après une élévation de la tension, ce qui permet d'adapter la détection d'un danger à l'extinction d'appareils de l'installation qui consommaient de l'énergie électrique lors de la définition de la tension de référence 106. Cela permet donc au dispositif de transmission 1 de s'adapter aux changements de consommation qui ont lieu au niveau de l'installation électrique. Préférentiellement, l'élévation de tension suite à laquelle la tension de référence est ajustée doit être observée pendant au moins 2 minutes, et ce en comparant la tension mesurée et la tension de référence mémorisée, comme le montre la figure 3, ou en détectant une variation croissante pendant un certain temps. Cela permet ainsi d'éviter de réajuster la tension de référence lors d'une élévation temporaire et brutale de la tension, due à des phénomènes ayant lieu au niveau du réseau électrique public 8 alimentant l'installation. Il se peut, en effet, que définir la tension de référence 106 se fasse alors que plusieurs autres équipements électriques, tels que four électrique, sèche linge ou autres, consomment aussi de l'énergie dans l'installation électrique. La figure 3 montre qu'ajuster la tension de référence 107 n'est réalisé que si une élévation significative de la tension est observée par rapport à la tension de référence, en termes de voltage et éventuellement aussi de durée.

Lors de l'extinction d'un de ces autres équipements électriques, voire de tous, la tension de l'électricité que peut fournir le dispositif de transmission 1 au consommateur 2 augmente. L'apparition d'un défaut pourra alors créer une baisse de tension par rapport à cette nouvelle tension, qui ne sera pas détectée comme dangereuse pour l'installation, puisque la tension de référence mémorisée est relative à un autre état de fonctionnement de l'installation. L'étape mentionnée ci-dessus a donc pour but d'adapter aux conditions de fonctionnement de l'installation la tension de référence utilisée pour détecter une situation de danger, afin d'éviter une ouverture tardive du commutateur 3, voire une ouverture inutile.

Ajuster la tension de référence 107 consiste donc à enregistrer une nouvelle tension de référence et peut être réalisée, par exemple, dès qu'une hausse de tension est détectée aux bornes du dispositif de transmission 1. Il suffit alors d'enregistrer la tension mesurée comme nouvelle tension de référence. L'ampérage peut aussi être mesuré et conditionner l'enregistrement de cette tension comme nouvelle valeur de tension de référence.

Dans des modes de réalisation particuliers, le procédé comprend une étape consistant à régler la valeur de la baisse de tension à partir de laquelle l'ouverture du commutateur 3 est commandée, et régler éventuellement aussi la valeur de la durée de la baisse de tension à partir de laquelle ladite ouverture est commandée, cette étape étant notamment réalisée en usine ou avant la transmission d'énergie électrique en tenant compte du au moins un consommateur 2.

Avantageusement, le procédé comprend éventuellement aussi une étape consistant à signaler l'ouverture 108 du commutateur 3, par affichage direct sur le dispositif de transmission 1 ou par communication via un réseau d'information, et/ou une étape consistant à commander la fermeture du commutateur 3, de sorte à permettre un démarrage de la transmission d'énergie électrique, éventuellement après une ouverture, et/ou une étape consistant à échanger des informations sur ledit réseau de communication, notamment recevoir et/ou envoyer des consignes, ce qui permet, par exemple, de piloter à distance le dispositif de transmission 1 ou d'obtenir des informations sur son état, sur les caractéristiques de l'électricité qu'il transmet, ou de la quantité d'énergie qu'il a fournie depuis le début de la transmission, par exemple. La figure 3 montre que signaler l'ouverture 108 se fait si une baisse de tension significative a été détectée.

Comme il a été indiqué plus haut, l'application d'un dispositif de transmission 1 selon l'invention a principalement été décrite pour la recharge de batterie électrique motrice de véhicule automobile, mais n'y est nullement limitée. En effet, tout type de consommateur 2 est concerné par le risque électrique que le dispositif de transmission 1 selon l'invention permet d'éviter, par exemple dès que, par inadvertance, celui-ci est maintenu allumé et sans surveillance, même si l'ampérage de l'électricité qu'il consomme n'est pas dangereux. Un dispositif de transmission 1 selon l'invention évite donc les risques liés à la quantité d'énergie électrique utilisée par au moins un consommateur 2, que celui-ci soit un luminaire, un appareil chauffant électrique du type radiateur électrique, un moteur, une pompe, un système de ventilation, des appareils électroménagers, des équipements informatiques, des machines outils, un chargeur électrique, un poste à souder, un amplificateur de puissance, etc.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de transmission (1) d'énergie électrique d'une installation électrique vers au moins un consommateur (2), transmettant préférentiellement toute l'électricité nécessaire audit au moins un consommateur (2), ledit dispositif comprenant un commutateur (3) dont l'ouverture stoppe ladite transmission d'énergie électrique, **caractérisé en ce qu'**il comprend, en outre :
- un moyen de mesure de la tension (4) transmise, notamment apte à mesurer la tension transmise (101) en continu lors de la transmission, et
- un moyen de commande (5), apte à commander l'ouverture (102) du commutateur (3), dès lors qu'est détectée, pour la tension transmise, une baisse de tension relativement continue, observée pendant une certaine durée, et pouvant être détectée grâce à la variation décroissante de la tension dans le temps, pendant un temps minimum, ladite baisse pouvant par exemple s'étendre sur plusieurs minutes ou des dizaines de minutes.

2. Dispositif de transmission (1) d'énergie électrique selon la revendication 1, **caractérisé en ce qu'**il comprend, en outre, une mémoire, apte à mémoriser une tension de référence, le moyen de commande (5) étant apte à commander l'ouverture (102) du commutateur (3) dès lors qu'une baisse de tension par rapport à cette tension de référence est détectée pour la tension transmise.

3. Dispositif de transmission (1) d'énergie électrique selon la revendication 2, **caractérisé en ce qu'**il comprend un moyen d'étalonnage apte à définir la tension de référence (104), notamment lors de la transmission d'énergie électrique.

4. Dispositif de transmission (1) d'énergie électrique selon l'une quelconque des revendications 1 à 3, **caractérisé en ce qu'**il comprend un moyen de mesure de l'ampérage (6), apte à mesurer l'ampérage (105) de l'électricité transmise, notamment le mesurer en continu ou au début de la transmission d'énergie électrique.

5. Dispositif de transmission (1) d'énergie électrique selon l'une quelconque des revendications 1 à 4, **caractérisé en ce qu'**au moins l'un quelconque, et préférentiellement tous, parmi le moyen de mesure de la tension (4) transmise, le moyen de commande (5), la ou une mémoire apte à mémoriser une tension de référence, le ou un moyen d'étalonnage apte à définir la tension de référence (104), et le ou un moyen de mesure de l'ampérage (6), est intégré, ou sont intégrés, dans un bloc autonome intermédiaire, pouvant être monté, directement ou non, entre un socle électrique de connexion, du type prise murale, et le au moins un consommateur (2).

6. Dispositif de transmission (1) d'énergie électrique selon l'une quelconque des revendications 1 à 5, **caractérisé en ce qu'**au moins l'un quelconque, et préférentiellement tous, parmi le moyen de mesure de la tension (4) transmise, le moyen de commande (5), la ou une mémoire apte à mémoriser une tension de référence, le ou un moyen d'étalonnage apte à définir la tension de référence (104), et le ou un moyen de mesure de l'ampérage (6), est embarqué, ou sont embarqués, au niveau du au moins un consommateur (2) auquel l'énergie est fournie, préférentiellement au consommateur (2) nécessitant le plus d'électricité ou l'unique consommateur (2).

7. Dispositif de transmission (1) d'énergie électrique selon l'une quelconque des revendications 1 à 6, **caractérisé en ce qu'**au moins l'un quelconque, et préférentiellement tous, parmi le moyen de mesure de la tension (4) transmise, le moyen de commande (5), la ou une mémoire apte à mémoriser une tension de référence, le ou un moyen d'étalonnage apte à définir la tension de référence (104), et le ou un moyen de mesure de l'ampérage (6), est intégré, ou sont intégrés, à un flexible destiné à être directement relié, d'une part, à un socle de connexion électrique, du type prise murale, et, d'autre part, à un consommateur (2) unique auquel l'électricité est transmise.

8. Dispositif de transmission (1) d'énergie électrique selon l'une quelconque des revendications 1 à 7, **caractérisé en ce qu'**au moins l'un quelconque, et préférentiellement tous, parmi le moyen de mesure de la tension (4) transmise, le moyen de commande (5), la ou une mémoire apte à mémoriser une tension de référence, le ou un moyen d'étalonnage apte à définir la tension de référence (104), et le ou un moyen de mesure de l'ampérage (6), est intégré ou sont intégrés à un socle de connexion électrique domestique, du type prise murale.

9. Dispositif de transmission (1) d'énergie électrique selon l'une quelconque des revendications 1 à 8, **caractérisé en ce qu'**il comporte, en outre, un moyen de réglage de sensibilité, permettant de régler la valeur de la baisse de tension à partir de laquelle la commande de l'ouverture (102 du commutateur (3) est effectuée, et régler éventuellement aussi la valeur de la durée de la baisse de tension à partir de laquelle ladite ouverture est commandée.

10. Dispositif de transmission (1) d'énergie électrique selon l'une quelconque des revendications 1 à 9, **caractérisé en ce qu'**il comporte, en outre, un moyen de signalisation d'état, permettant au moins de signaler l'ouverture (108) du commutateur (3).

11. Dispositif de transmission (1) d'énergie électrique selon l'une quelconque des revendications 1 à 10, **caractérisé en ce qu'**il comporte, en outre, un moyen de connexion à un réseau de communication tel qu'un réseau domotique, du type bus EIB ou LAN - Local Area Network, permettant au dispositif de transmission (1) d'échanger des informations sur ledit réseau de communication, notamment recevoir et/ou envoyer des consignes.

12. Procédé de surveillance d'un dispositif d'énergie électrique d'une installation électrique vers au moins un consommateur (2), transmettant préférentiellement toute l'électricité nécessaire audit au moins un consommateur (2), ledit dispositif comprenant un commutateur (3) dont l'ouverture stoppe ladite transmission d'énergie électrique, **caractérisé en ce qu'**il comprend les étapes consistant à :
- mesurer la tension transmise (101), notamment mesurer la tension transmise (101) en continu lors de la transmission, et
- commander l'ouverture (102) du commutateur (3), dès lors qu'est détectée, pour la tension transmise, une baisse de tension relativement continue, observée pendant une certaine durée, et pouvant être détectée grâce à la variation décroissante de la tension dans le temps, pendant un temps minimum, ladite baisse pouvant par exemple s'étendre sur plusieurs minutes ou des dizaines de minutes.

13. Procédé selon la revendication 12, **caractérisé en ce qu'**il comprend, en outre, une étape consistant à comparer la tension mesurée avec une tension de référence (103), l'étape de commande de l'ouverture (102) du commutateur (3) étant réalisée dès lors qu'une baisse de tension par rapport à cette tension de référence est détectée pour la tension transmise.

14. Procédé selon l'une quelconque des revendications 12 ou 13, **caractérisé en ce qu'**il comprend une étape consistant à définir la tension de référence (104), notamment lors de la transmission d'énergie électrique.

15. Procédé selon l'une quelconque des revendications 12 à 14, **caractérisé en ce qu'**il comprend une étape consistant à mesurer l'ampérage (105) de l'électricité transmise, notamment le mesurer en continu ou au début de la transmission d'énergie électrique, l'éventuelle étape de définition de la tension de référence (104) étant réalisée au début de la transmission d'énergie électrique et consistant à définir, comme tension de référence, la tension relevée alors que l'ampérage de l'électricité transmise est faible, notamment inférieure à 1 Ampère.

16. Procédé selon les revendications 14 et 15, **caractérisé en ce qu'**il comprend, en outre, une étape consistant à signaler l'impossibilité de définir la tension de référence (106), notamment lorsque l'ampérage de l'électricité qui circule est trop élevé dès le début de la transmission.

17. Procédé selon l'une quelconque des revendications 13 à 16, **caractérisé en ce qu'**il comprend, en outre, une étape consistant à ajuster la tension de référence (107), revenant à modifier la tension de référence, réalisée au cours de la transmission d'énergie électrique, préférentiellement après une élévation de la tension.

18. Procédé selon l'une quelconque des revendications 13 à 17, **caractérisé en ce qu'**il comprend une étape consistant à régler la valeur de la baisse de tension à partir de laquelle l'ouverture du commutateur (3) est commandée, et régler éventuellement aussi la valeur de la durée de la baisse de tension à partir de laquelle ladite ouverture est commandée, cette étape étant notamment réalisée en usine ou avant la transmission d'énergie électrique en tenant compte du au moins un consommateur (2).

19. Procédé selon l'une quelconque des revendications 12 à 18, **caractérisé en ce qu'**il comprend une étape consistant à signaler l'ouverture (108) du commutateur (3).

20. Procédé selon l'une quelconque des revendications 12 à 19, **caractérisé en ce qu'**il comprend une étape consistant à commander la fermeture du commutateur (3), de sorte à permettre un démarrage de la transmission d'énergie électrique.

21. Procédé selon l'une quelconque des revendications 12 à 20, **caractérisé en ce qu'**il comprend une étape consistant à échanger des informations sur ledit réseau de communication, notamment recevoir et/ou envoyer des consignes.
